# EUROPEAN PATENT SPECIFICATION

(11) **EP 4 456 223 B1**
(45) Date of publication and mention of the grant of the patent: **18.06.2025**
(21) Application number: 23169778.0
(22) Date of filing: 25.04.2023
(51) Int. Cl.: H01M 10/04, H01M 4/64, H01M 4/70, H01M 50/46, H01M 50/48

(54) **BATTERY WITH DEFORMABLE METAMATERIAL UNIT**
BATTERIE MIT VERFORMBARER METAMATERIALEINHEIT
BATTERIE À UNITÉ DE MÉTAMATÉRIAU DÉFORMABLE

(43) Date of publication of application: 30.10.2024
(73) Proprietor: Volvo Car Corporation, 405 31 Göteborg (SE)
(72) Inventor: ORBAY, Raik, 40531 Göteborg (SE); BERNICHON, Thomas, 40531 Göteborg (SE)
(74) Representative: Maiwald GmbH

(56) References cited:
- CN-A- 113 328 167
- US-A1- 2014 349 162
- YOU JUNJIE ET AL: "Safe energy-storage mechanical metamaterials via architecture design", EPJ APPLIED METAMATERIALS, vol. 10, 9 January 2023 (2023-01-09), pages 1 - 7, XP093127626, ISSN: 2272-2394, Retrieved from the Internet <URL:https://dx.doi.org/10.1051/epjam/2022018> DOI: 10.1051/epjam/2022018
- ZHOU XUELI ET AL: "Advances in 3D/4D printing of mechanical metamaterials: From manufacturing to applications", COMPOSITES PART B, ELSEVIER, AMSTERDAM, NL, vol. 254, 4 February 2023 (2023-02-04), XP087274739, ISSN: 1359-8368, [retrieved on 20230204], DOI: 10.1016/J.COMPOSITESB.2023.110585

## Description

### TECHNICAL FIELD

The present disclosure relates to a battery unit for storing electrical energy, and a vehicle with at least one battery unit.

### BACKGROUND ART

Known battery units may, for example, change their respective dimensions due to external influences and/or usage-related effects and/or effects during use, whereby the anode of a battery unit in particular may be affected. Thereby in particular in breathing-swelling behavior may occur. This change of the dimensions may provide a disadvantageous effect on at least the lifetime of a battery unit.

Battery packs using a metamaterial are described in You Junjie et al.: "Safe energy-storage mechanical metamaterials via architecture design", EPJ APPLIED METAMATERIALS, vol. 10, 9 January 2023, in Yao Huang et al.: "Novel Lightweight and Protective Battery System Based on Mechanical Metamaterials", ACTA MECHANICA SOLIDA SINICA, vol. 34, no. 6, 6 December 2021, and in CN 113 328 167 A.

In view of this, it is found that a further need exists to provide an improved battery unit for storing electrical energy.

### SUMMARY

In the view of the above, it is an object of the present disclosure to provide an improved battery unit for storing electrical energy.

The problem is at least partially solved or alleviated by the subject matter of the independent claim 1 of the present disclosure, whereby further examples are incorporated in the dependent claims.

According to a first aspect, a battery unit for storing electrical energy, comprising: at least two electrodes, whereby one of the electrodes is an anode and one of the electrodes is a cathode; and at least one deformable metamaterial unit, whereby the at least one deformable metamaterial unit is configured to control and limit an expansion at least of the anode, and/or the battery unit comprises two, four or more, preferably eight, deformable metamaterial units surrounding the anode and/or the at least one deformable metamaterial unit is formed as a continuous surface configured to surround the anode.

The battery unit may for example be a battery of a vehicle preferably the battery unit may also be a battery for operating a vehicle. Furthermore, the at least two electrodes may therefore be configured to provide the energy of the battery, preferably to a vehicle.

Furthermore, the battery unit may comprise many cells constrained in a battery(module) package.

The contemporary solutions of battery units, in particular Li-ion battery units, may exhibit a swelling behavior due to cycling. The cycling may comprise charging - discharge episodes but also environmental effects like temperature fluctuations as well as storage and calendar life. Cycling caused mechanical response of the battery may, therefore, impact the battery state of health through fatigue affecting battery cell constituents.

The at least one deformable metamaterial unit may be a manufactured unit, which may for example be made of a certain material composition, for example the at least one deformable metamaterial unit may comprise manufactured materials, which may comprise optical, electrical or magnetic, mechanical properties that cannot be found in nature. For example, the at least one deformable metamaterial unit may not derive its properties from the properties of the base materials, but from their newly designed structures.

The at least one deformable metamaterial unit may also be referred to herein as a deformable metamaterial unit and/or a metamaterial unit.

For example, the at least one deformable metamaterial unit may be configured such that it may be compressed by at least one applied force and return to its precompression shape after the applied force is removed. For example, deformable may also be understood as compressible. Therefore, the at least one deformable metamaterial unit may be configured such that its shape is reversibly and/or variable.

The at least one deformable metamaterial unit may therefore be configured to counteract an occurring force, for example, to control a movement of the occurring mechanical response. In this respect, the deformable metamaterial unit may for example counteract occurring forces in the battery unit.

Therefore, the at least one deformable metamaterial unit may also be configured to counteract an occurring moment and/or shear, for example, to control a movement due to the occurring mechanical response. In this respect, the deformable metamaterial unit may for example counteract occurring swelling response in the battery unit.

Furthermore, the at least one deformable metamaterial unit may be configured to alleviate mechanical response of batteries during cycling is provided.

For example, forces in the battery unit may also occur due to external influences, such as for example heat, cold, dryness and/or humidity, mechanical shocks, and/or due to aging of the battery unit as well as seasonal effects.

In an implementation, the at least one deformable metamaterial unit layer may comprise interconnected suspension units.

The interconnected suspension units may be arranged between the anode and a separator material, whereby a need for a support material may be excluded.

In another implementation, the at least one deformable metamaterial unit may be arranged between the anode and a support element.

The support element may be configured to unilaterally support the at least one deformable metamaterial unit, whereby, for example, a force applied to the at least one deformable metamaterial unit may be supported by the support element. Furthermore, the support element may be configured to be fixed in the battery unit or mechanically attached to separator material.

In an implementation, the at least one deformable metamaterial unit may comprise a cylindrical structure formed of one or more circular elements.

The at least one deformable metamaterial unit may comprise one, two, three, four, five or more circular elements which are configured to form the structure of the deformable metamaterial unit.

In an implementation, the one or more circular elements may be formed by means of a plurality of cells comprising at least a first cell shape and a second cell shape, for example as subsets of the metamaterial unit.

The cell shape may comprise a first cell shape formed of a first horizontal rib and a second horizontal rib connected by a first horizontal lying v and a second horizontal lying v mirrored about a vertical axis of the first cell shape.

Furthermore, the cell shape may comprise a second cell shape formed of a first horizontal rib and a second horizontal rib connected by a first horizontal lying w and a second horizontal lying w mirrored about a vertical axis of the second cell shape, whereby a third horizontal rip may be connected the first horizontal lying w with the second horizontal lying w.

For example, the horizontal lying v or the horizontal lying w may be formed by means of corners, which comprise a rounded edge shape. Furthermore, the entire cell shape may comprise corners that have a rounded edge shape.

In another embodiment, the horizontal lying v or the horizontal lying w may be formed by means of corners, which comprise a sharp edge shape. Furthermore, the entire cell shape may comprise corners that have a sharp edge shape.

The first cell shape and/or the second cell shape may be configured to be reversibly deformed by an applied force.

In an implementation, the at least one deformable metamaterial unit may be produced by a nano engineering, stamping, weaving, rolling, laser cutting and/or water cutting and/or 3D printing method and/or 3D printing method.

Furthermore, for example, traditional manufacturing processes such as stamping, rolling, laser cutting and/or water cutting may also be used to produce the at least one deformable metamaterial unit.

In some examples, the at least one deformable metamaterial may also be produced by plastic welding, weaving, tissue knitting and/or stamped out of other continuum material.

In an implementation, the at least one deformable metamaterial unit may has a length between 1 nanometer [nm] and 100 millimeter [mm]; and whereby the at least one deformable metamaterial unit may has diameter between 1 [nm] and 100 [mm].

In an example, the at least one deformable metamaterial unit may has a length between 1 and 1000 [nm]; and whereby the at least one deformable metamaterial unit may has diameter between 1 and 1000 [nm].

In another example, the at least one deformable metamaterial unit may has a length between 1 and 1000 micrometer [µm]; and whereby the at least one deformable metamaterial unit may has diameter between 1 and 1000 [µm].

In another example, the at least one deformable metamaterial unit may has a length between 1 and 100 [mm]; and whereby the at least one deformable metamaterial unit may has diameter between 1 and 100 [mm].

The at least one deformable metamaterial unit may be configured to limit and/or control at least a breathing-swelling behavior of the battery unit. Furthermore, the deformable metamaterial unit may be configured such that the at least breathing-swelling behavior can be controlled.

Furthermore, the battery unit may comprise three, five, seven or more deformable metamaterial units surrounding the anode.

In an example, the battery unit may also comprise a plurality of continuous surfaces configured to surround the anode metamaterial layer as a scaffolding.

In an example, the battery unit may also comprise a plurality of continuous surfaces configured to surround the anode metamaterial layer as a scaffolding may be designed as metamaterial.

In an implementation, the two, four or more, preferably eight, deformable metamaterial units may be equally arranged on the anode; and/or the deformable metamaterial unit may be formed as a continuous surface is equally arranged around the anode; and/or the two, four or more, preferably eight, deformable metamaterial units may be each arranged in spaced apart relationship; and/or the deformable metamaterial unit may be formed as a continuous surface, is wrapped around the anode in such a way that a first wrapping of the deformable metamaterial unit is spaced apart from a second wrapping of the deformable metamaterial unit.

The arrangement of the two, four or more, preferably eight, deformable metamaterial units and/or the wrapping of the continuous surface with the scaffolding may be distributed over the length and/or diameter of the anode.

The equal arrangement of the two, four or more, preferably eight, deformable metamaterial units and/or the continuous surface may be configured to limit and/or control the at least breathing-swelling behavior of the battery unit, in particular the anode, but alternatively on other electrode configurations as well as the cathode uniformly within the battery unit.

The two, four or more, preferably eight, deformable metamaterial units and/or the continuous surface may be configured to limit and/or control the at least breathing-swelling behavior at least at the arranged position on the anode.

In an implementation, the battery unit may further comprise a mesh unit may be configured to keep the two, four or more, preferably eight, deformable metamaterial units and/or the deformable metamaterial unit formed as a continuous surface in position.

The mesh unit may for example be configured to surround the two, four or more, preferably eight, deformable metamaterial units and/or the deformable metamaterial unit formed as a continuous surface and/or to be embedded in the two, four or more, preferably eight, deformable metamaterial units and/or the deformable metamaterial unit formed as a continuous surface. In an example, the mesh unit may be configured to surround the two, four or more, preferably eight, deformable metamaterial units and/or the deformable metamaterial unit formed as a continuous surface in at least one part and to be embedded in the two, four or more, preferably eight, deformable metamaterial units and/or the deformable metamaterial unit formed as a continuous surface in another part.

In an implementation, the battery unit may further comprise a support structure as a scaffolding configured to be integrated into and/or arranged around the mesh unit in a clockwise and/or counterclockwise direction.

The support structure may be configured as a continuous surface that is, for example, wrapped around the battery unit. For example, the support structure may be configured as a truss system.

Further, the support structure may be configured as a permeable, flexible, framework in order to hold the at least one metamaterial unit in place. Additionally, the framework may be woven.

Furthermore, the support structure may for example be at least partially made of metamaterial, whereby the support structure is not limited to being made of metamaterial.

In an implementation, the battery unit may be a propulsion battery and/or the battery unit is configured as a solid-state battery.

In an implementation, the at least two electrodes and/or the battery unit may comprise a silicon material, graphite material and/or lithium-ion material.

In other embodiments, the at least two electrodes and/or the battery unit may comprise nickel and/or sodium material.

The lithium-ion material may be in any phase form, for example, liquid, solid, gas and/or plasma.

For example, other materials may also be conceivable if they are configured in order to form electrodes of a battery and/or a battery unit.

A further aspect of the present disclosure relates to a vehicle with at least one disclosed battery unit as claimed in claim 12.

### BRIEF DESCRIPTION OF DRAWINGS

In the following, the disclosure is described exemplarily with reference to the enclosed figures, in which:
- **Fig. 1**: is a schematic illustration showing an overview of an anode of the disclosed battery unit for storing electrical energy;
- **Fig. 2a**: is a schematic illustration showing a first example of a cell shape of circular elements of the disclosed deformable metamaterial unit;
- **Fig. 2b**: is a schematic illustration showing a second example of a cell shape of circular elements of the disclosed deformable metamaterial unit;
- **Fig. 3a**: is a schematic illustration showing a first example of a structure of the disclosed deformable metamaterial unit;
- **Fig. 3b**: is a schematic illustration showing a second example of a structure of the disclosed deformable metamaterial unit;
- **Fig. 3c**: is a schematic illustration showing a third example of a structure of the disclosed deformable metamaterial unit;
- **Fig. 3d**: is a schematic illustration showing a fourth example of a structure of the disclosed deformable metamaterial unit;
- **Fig. 4a**: is a schematic illustration showing an example of a scaffolding structure of the disclosed deformable metamaterial unit of **Fig.1****;** and
- **Fig. 4b**: is a schematic illustration showing the example of the scaffolding structure of **Fig. 4a** in a more detailed view.

Notably, the figures are merely schematic representations and serve only to illustrate examples of the present disclosure. Identical or equivalent elements are in principle provided with the same reference signs.

### DETAILED DESCRIPTION

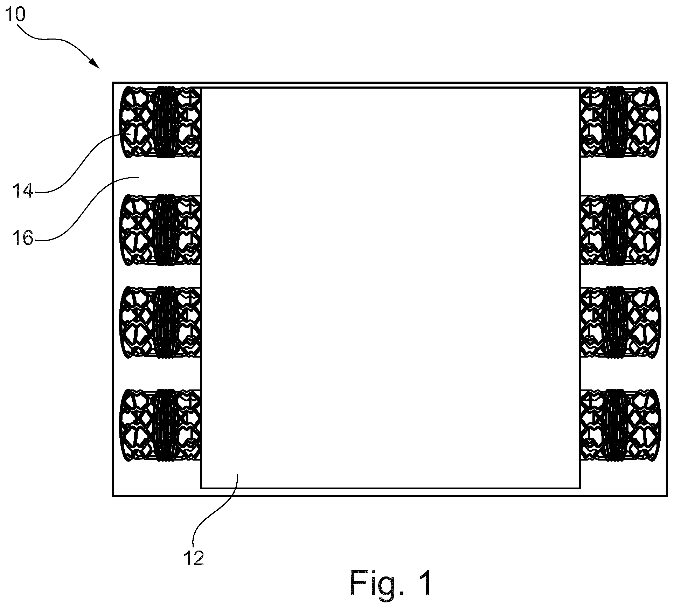

**Fig. 1** shows a schematic illustration showing an overview of an anode of the disclosed battery unit 10 for storing electrical energy comprising: at least two electrodes, whereby one of the electrodes is an anode 12 and one of the electrodes is a cathode; and eight deformable metamaterial units 14 surround the anode 12.

Furthermore, the eight deformable metamaterial units 14 are equally arranged on the anode 12 as well as the eight deformable metamaterial units 14 are each arranged in spaced apart relationship.

Further, the battery unit 10 is further comprising a mesh unit 16 configured to keep the eight deformable metamaterial units 14 in position.

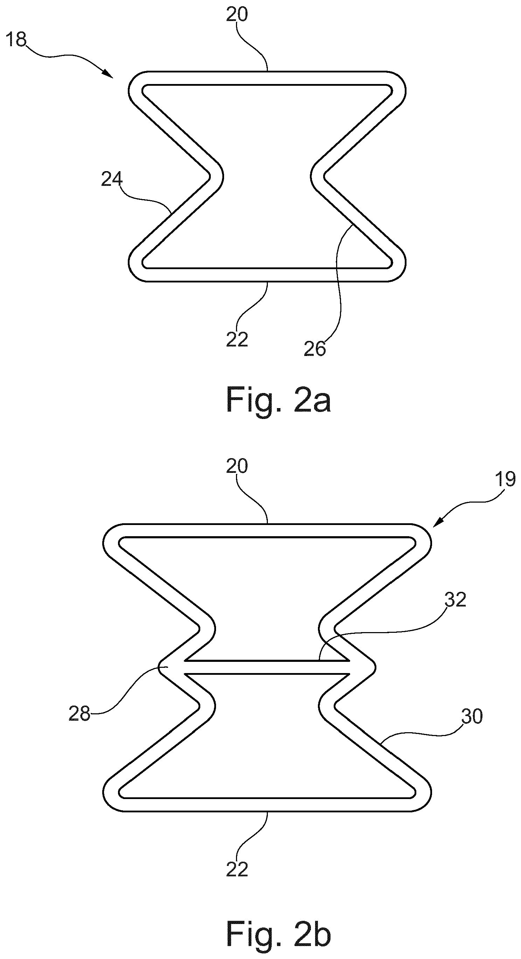

**Fig. 2a** shows a schematic illustration showing a first example of a cell shape of circular elements of the disclosed deformable metamaterial unit, whereby a first cell shape 18 is formed of two horizontal ribs 20, 22 connected by a first horizontal lying v 24 and a second horizontal lying v 26 mirrored about a vertical axis of the first cell shape.

**Fig. 2b** sows a schematic illustration showing a second example of a cell shape of circular elements of the disclosed deformable metamaterial unit, whereby a second cell shape 19 is formed of two horizontal ribs 20, 22 connected by a first horizontal lying w 28 and a second horizontal lying w 30 mirrored about a vertical axis of the second cell shape, whereby a third horizontal rip 32 connect the first horizontal lying w 28 with the second horizontal lying w 30.

**Figs. 2a** and **2b** show the horizontal lying v and the horizontal lying w be formed by means of corners, which comprise a rounded edge shape. Furthermore, the entire cell shape comprises corners that have a rounded edge shape.

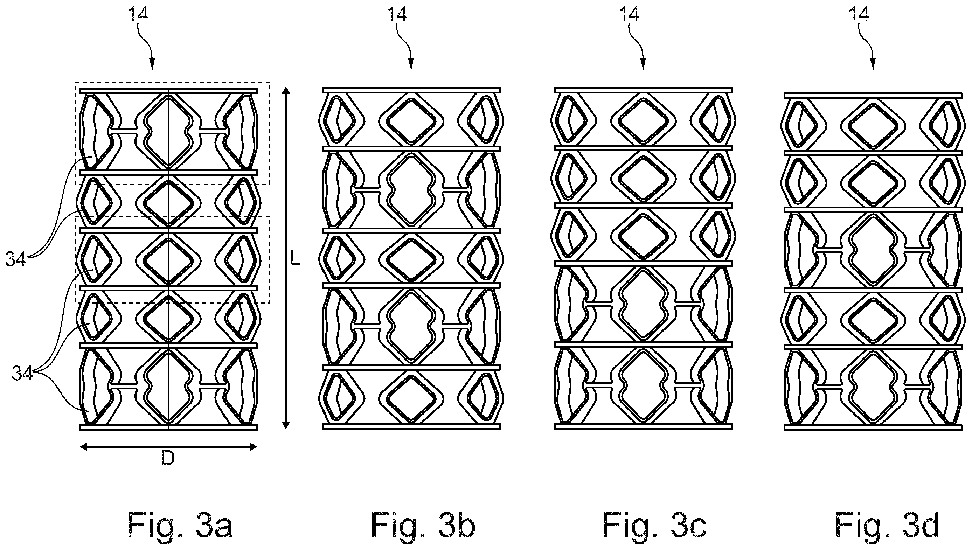

**Figs. 3a, 3b, 3c** and **3d** show a schematic illustration showing a first, second, third and fourth example of a structure of the disclosed deformable metamaterial unit 14, whereby a cylindrical structure of the deformable metamaterial unit 14 is formed by five circular elements 34.

Furthermore, the five circular elements 34 are formed of a plurality of interconnected cells of a first cell shape and/or a second cell shape according to **Figs. 2a** and/or **2b.** Thereby, **Figs. 3a, 3b, 3c** and **3d** each show different configurations of the respective circular elements 34 with the corresponding cell shapes.

Further, the deformable metamaterial unit 14 comprises a length (L) and a diameter (D), whereby in this embodiment, the metamaterial unit 14 comprises a ratio between the length and the diameter of 4 to 1.

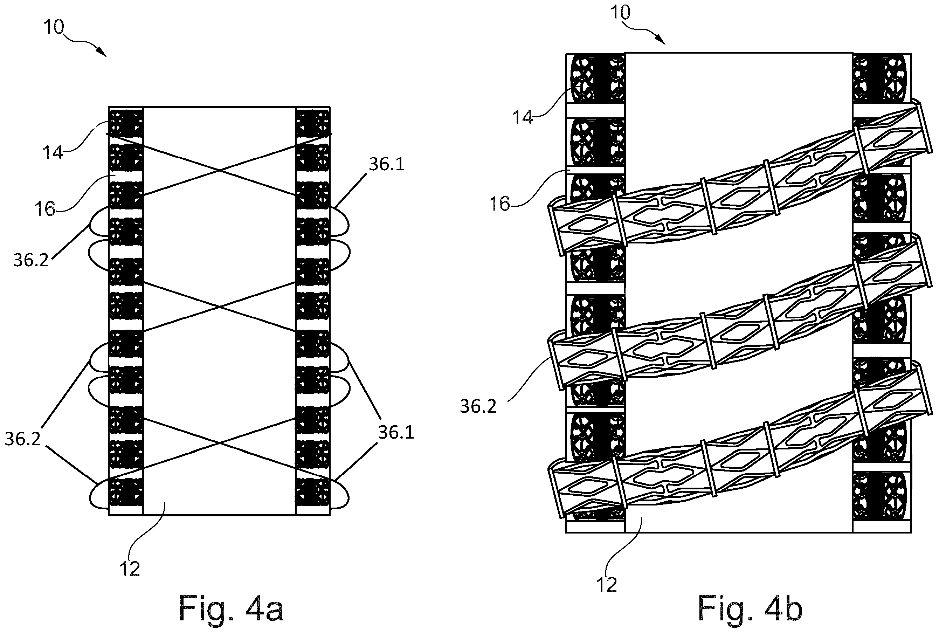

**Fig. 4a** shows a schematic illustration showing an example of a support structure of the disclosed deformable metamaterial unit 14 of **Fig. 1****,** whereby twentyfour deformable metamaterial units 14 are surrounding the anode 12 and are supported by the mesh unit 16.

In addition, **Fig. 4a** shows a first support structure 36.1 and a second support structure 36.2 formed as a scaffolding configured to be integrated into and/or arranged around the mesh unit 16.

Furthermore, the first support structure 36.1 is integrated into and/or arranged around the mesh unit 16 in a clockwise direction. Further, the second support structure 36.2 is integrated into and/or arranged around the mesh unit 16 in a counterclockwise direction.

**Fig. 4b** shows a schematic illustration showing the example of the scaffolding structure of **Fig. 4a** in a more detailed view, whereby in particular the second support structure 36.2 is shown in more detail, in such a way that an internal structure of the second support structure 36.2 is shown.

Thereby, the second support structure 36.2comprises a structure similar to the structure of the metamaterial units 14.

In the claims, the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 10: battery unit
- 12: anode
- 14: deformable metamaterial unit
- 16: mesh unit
- 18: first cell shape
- 19: second cell shape
- 20: first horizontal rib
- 22: second horizontal rib
- 24: first lying v
- 26: second lying v
- 28: first lying w
- 30: second lying w
- 32: third horizontal rip
- 34: circular elements
- 36.1: first support structure
- 36.2: second support structure
- L: length
- D: diameter

## Claims

1. Battery unit for storing electrical energy, comprising:
at least two electrodes, whereby one of the electrodes is an anode (12) and one of the electrodes is a cathode; and
at least one deformable metamaterial unit (14),
**characterized in that**:
- the at least one deformable metamaterial unit (14) is configured to control and limit an expansion at least of the anode (12), and/or
- the battery unit (10) comprises two, four or more, preferably eight, deformable metamaterial units (14) surrounding the anode (12) and/or the at least one deformable metamaterial unit (14) is formed as a continuous surface configured to surround the anode (12).

2. The battery unit according to claim 1, whereby the at least one deformable metamaterial unit (14) comprise at least one layer with interconnected suspension units.

3. The battery unit according to claim 1 or claim 2, whereby the at least one deformable metamaterial unit (14) comprises a cylindrical structure formed of one or more circular elements (34).

4. The battery unit according to claim 3, whereby the one or more circular elements (34) are formed by means of a plurality of cells comprising at least a first cell shape (18) and/or a second cell shape (19).

5. The battery unit according to any one of the preceding claims, whereby the at least one deformable metamaterial unit (14) is produced by a nano engineering, stamping, weaving, rolling, laser cutting and/or water cutting and/or 3D printing method.

6. The battery unit according to any one of the preceding claims, whereby the at least one deformable metamaterial unit (14) has a length between 1 [nm] and 100 [mm]; and whereby the at least one deformable metamaterial unit (14) has diameter between 1 [nm] and 100 [mm].

7. The battery unit according to any one of the preceding claims, whereby the two, four or more, preferably eight, deformable metamaterial units (14) are equally arranged on the anode (12); and/or the at least one deformable metamaterial unit (14) formed as a continuous surface is equally arranged around the anode (12); and/or the two, four or more, preferably eight, deformable metamaterial units (14) are each arranged in spaced apart relationship; and/or the at least one deformable metamaterial unit (14) formed as a continuous surface is wrapped around the anode (12) in such a way that a first wrapping of the at least one deformable metamaterial unit (14) is spaced apart from a second wrapping of the at least one deformable metamaterial unit (14).

8. The battery unit according to any one of the preceding claims, whereby the battery unit (10) is further comprising a mesh unit (16) configured to keep the two, four or more, preferably eight, deformable metamaterial units (14) and/or the at least one deformable metamaterial unit (14) formed as a continuous surface in position.

9. The battery unit according to any one of the preceding claims, whereby the battery unit (10) is further comprising a support structure (36) as a scaffolding configured to be integrated into and/or arranged around the mesh unit (16) in a clockwise and/or counterclockwise direction.

10. The battery unit according to any one of the preceding claims, whereby the battery unit (10) is a propulsion battery and/or the battery unit (10) is configured as a solid-state battery.

11. The battery unit according to any one of the preceding claims, whereby the at least two electrodes and/or the battery unit (10) comprise a silicon material, graphite material and/or lithium-ion material.

12. Vehicle with at least one battery unit according to any one of the preceding claims.

## Patentansprüche

1. Batterieeinheit zur Speicherung elektrischer Energie, aufweisend:
mindestens zwei Elektroden, wobei eine der Elektroden eine Anode (12) und eine der Elektroden eine Kathode ist; und
mindestens eine verformbare Metamaterialeinheit (14),
**dadurch gekennzeichnet, dass**:
- die mindestens eine verformbare Metamaterialeinheit (14) so konfiguriert ist, dass sie eine Ausdehnung zumindest der Anode (12) kontrolliert und begrenzt, und/oder
- die Batterieeinheit (10) zwei, vier oder mehr, vorzugsweise acht, verformbare Metamaterialeinheiten (14) umfasst, die die Anode (12) umgeben, und/oder die mindestens eine verformbare Metamaterialeinheit (14) als eine kontinuierliche Oberfläche ausgebildet ist, die so konfiguriert ist, dass sie die Anode (12) umgibt.

2. Batterieeinheit nach Anspruch 1, wobei die mindestens eine verformbare Metamaterialeinheit (14) mindestens eine Schicht mit miteinander verbundenen Aufhängungseinheiten umfasst.

3. Batterieeinheit nach Anspruch 1 oder Anspruch 2, wobei die mindestens eine verformbare Metamaterialeinheit (14) eine zylindrische Struktur umfasst, die aus einem oder mehreren kreisförmigen Elementen (34) besteht.

4. Batterieeinheit nach Anspruch 3, wobei das eine oder die mehreren kreisförmigen Elemente (34) durch eine Vielzahl von Zellen gebildet werden, die mindestens eine erste Zellenform (18) und/oder eine zweite Zellenform (19) aufweisen.

5. Batterieeinheit nach einem der vorhergehenden Ansprüche, wobei die mindestens eine verformbare Metamaterialeinheit (14) durch ein Nano-Engineering-, Stanz-, Web-, Walz-, Laserschneide- und/oder Wasserschneideund/oder 3D-Druckverfahren hergestellt wird.

6. Batterieeinheit nach einem der vorhergehenden Ansprüche, wobei die mindestens eine verformbare Metamaterialeinheit (14) eine Länge zwischen 1 [nm] und 100 [mm] hat; und wobei die mindestens eine verformbare Metamaterialeinheit (14) einen Durchmesser zwischen 1 [nm] und 100 [mm] hat.

7. Batterieeinheit nach einem der vorhergehenden Ansprüche, wobei die zwei, vier oder mehr, vorzugsweise acht, verformbaren Metamaterialeinheiten (14) gleichmäßig auf der Anode (12) angeordnet sind; und/oder die mindestens eine als zusammenhängende Fläche ausgebildete verformbare Metamaterialeinheit (14) gleichmäßig um die Anode (12) angeordnet ist; und/oder die zwei, vier oder mehr, vorzugsweise acht, verformbaren Metamaterialeinheiten (14) jeweils beabstandet angeordnet sind; und/oder die mindestens eine als durchgehende Fläche ausgebildete verformbare Metamaterialeinheit (14) derart um die Anode (12) gewickelt ist, dass eine erste Umwicklung der mindestens einen verformbaren Metamaterialeinheit (14) von einer zweiten Umwicklung der mindestens einen verformbaren Metamaterialeinheit (14) beabstandet ist.

8. Batterieeinheit nach einem der vorhergehenden Ansprüche, wobei die Batterieeinheit (10) ferner eine Netzeinheit (16) umfasst, die so konfiguriert ist, dass sie die zwei, vier oder mehr, vorzugsweise acht, verformbaren Metamaterialeinheiten (14) und/oder die mindestens eine verformbare Metamaterialeinheit (14), die als eine durchgehende Oberfläche ausgebildet ist, in Position hält.

9. Batterieeinheit nach einem der vorhergehenden Ansprüche, wobei die Batterieeinheit (10) ferner eine Stützstruktur (36) als Gerüst umfasst, die so konfiguriert ist, dass sie im Uhrzeigersinn und/oder entgegen dem Uhrzeigersinn in die Netzeinheit (16) integriert und/oder um diese herum angeordnet werden kann.

10. Batterieeinheit nach einem der vorhergehenden Ansprüche, wobei die Batterieeinheit (10) eine Antriebsbatterie ist und/oder die Batterieeinheit (10) als Festkörperbatterie ausgebildet ist.

11. Batterieeinheit nach einem vorhergehenden Ansprüche, wobei die mindestens zwei Elektroden und/oder die Batterieeinheit (10) ein Siliziummaterial, Graphitmaterial und/oder Lithium-Ionen-Material aufweisen.

12. Fahrzeug mit mindestens einer Batterieeinheit nach einem der vorhergehenden Ansprüche.

## Revendications

1. Unité de batterie pour le stockage de l'énergie électrique, comprenant
au moins deux électrodes, l'une des électrodes étant une anode (12) et l'autre une cathode ; et
au moins une unité métamatérielle déformable (14),
caractérisé dans ce domaine :
- l'au moins une unité métamatérielle déformable (14) est configurée pour contrôler et limiter une expansion au moins de l'anode (12), et/ou
- l'unité de batterie (10) comprend deux, quatre ou plus, de préférence huit, unités métamatérielles déformables (14) entourant l'anode (12) et/ou l'au moins une unité métamatérielle déformable (14) est formée comme une surface continue configurée pour entourer l'anode (12).

2. L'unité de batterie selon la revendication 1, dans laquelle au moins une unité métamatérielle déformable (14) comprend au moins une couche avec des unités de suspension interconnectées.

3. L'unité de batterie selon la revendication 1 ou la revendication 2, dans laquelle l'au moins une unité métamatérielle déformable (14) comprend une structure cylindrique formée d'un ou plusieurs éléments circulaires (34).

4. L'unité de batterie selon la revendication 3, les un ou plusieurs éléments circulaires (34) étant formés au moyen d'une pluralité de cellules comprenant au moins une première forme de cellule (18) et/ou une deuxième forme de cellule (19).

5. L'unité de batterie selon l'une quelconque revendications précédentes, l'au moins une unité métamatérielle déformable (14) étant produite par une méthode de nano-ingénierie, d'emboutissage, de tissage, de laminage, de découpe laser et/ou de découpe à l'eau et/ou d'impression 3D.

6. L'unité de batterie selon l'une quelconque des revendications précédentes, dans laquelle l'au moins une unité métamatérielle déformable (14) a une longueur comprise entre 1 [nm] et 100 [mm] ; et dans laquelle l'au moins une unité métamatérielle déformable (14) a un diamètre compris entre 1 [nm] et 100 [mm].

7. L'unité de batterie selon l'une quelconque des revendications précédentes, dans laquelle les deux, quatre ou plus, de préférence huit, unités de métamatériaux déformables (14) sont disposées de manière égale sur l'anode (12) ; et/ou l'au moins une unité de métamatériaux déformables (14) formée comme une surface continue est disposée de manière égale autour de l'anode (12) ; et/ou les deux, quatre ou plus, de préférence huit, unités de métamatériaux déformables (14) sont chacune disposées de manière espacée ; et/ou l'au moins une unité de métamatériaux déformables (14) formée comme une surface continue est enroulée autour de l'anode (12) de telle sorte qu'une première enveloppe de l'au moins une unité de métamatériaux déformables (14) est espacée d'une seconde enveloppe de l'au moins une unité de métamatériaux déformables (14).

8. L'unité de batterie selon l'une quelconque des revendications précédentes, l'unité de batterie (10) comprenant en outre une unité de maille (16) configurée pour maintenir en position les deux, quatre ou plus, de préférence huit, unités métamatérielles déformables (14) et/ou l'au moins une unité métamatérielle déformable (14) formée en tant que surface continue.

9. L'unité de batterie selon l'une quelconque des revendications précédentes, l'unité de batterie (10) comprenant en outre une structure de support (36) sous forme d'échafaudage configuré pour être intégré et/ou disposé autour de l'unité de maille (16) dans le sens des aiguilles d'une montre et/ou dans le sens inverse des aiguilles d'une montre.

10. L'unité de batterie selon l'une quelconque des revendications précédentes, l'unité de batterie (10) étant une batterie de propulsion et/ou l'unité de batterie (10) étant configurée comme une batterie à l'état solide.

11. L'unité de batterie selon l'une quelconque revendications précédentes, les deux électrodes au moins et/ou l'unité de batterie (10) étant constituées d'un matériau en silicium, d'un matériau en graphite et/ou d'un matériau en lithium-ion.

12. Véhicule avec au moins une unité de batterie selon l'une des revendications précédentes.
